# EUROPEAN PATENT APPLICATION

(11) **EP 3 834 622 A1**
(43) Date of publication of application: **16.06.2021**
(21) Application number: 19215087.8
(22) Date of filing: 11.12.2019
(51) Int. Cl.: A23L 2/54, B67D 1/00, B01F 3/04

(54) **CARBONATION PROCESS**

(71) Applicant: Unito Smart Technologies Limited, Hong Kong (CN)
(72) Inventor: Dahan, Yuval - Yoni, Rishon Lezion (IL); Dahan, Abraham, Rishon Lezion (IL)
(74) Representative: Weickmann & Weickmann PartmbB

(57) **Abstract**

The present invention relates to a method for preparing and providing a carbonized liquid (14), comprising:
providing a liquid to be carbonized in a tank (12),
providing a gas in the tank (12), and
discharging the carbonized liquid (14) using a pressure difference between the pressure prevailing in the tank (12) and a pressure prevailing in the outlet duct (40) and/or at an outlet end (42) of the outlet duct (40),
at least one injecting nozzle (34),
wherein, when in normal operation mode, the gas having entered the tank (12) is leaving the tank (12) substantially only via the outlet duct (40). Further, the present invention relates to an according system (10).

## Description

The current invention refers to a method for preparing and providing a carbonized liquid.

There are many methods for preparing carbonated liquid for home use on the market today. Some of them are processed manually, others are controlled and processed by electronic controllers and electric means.

Mostly the process known today is characterized by controlling and limiting the pressure carbonation in the tank. When a carbonation process includes a mixing device, a low-level carbonation pressure may be required in the pressurized tank (for example about 5 bar or less), while a process without a mixing device usually requires a higher injection pressure and a higher tank pressure, for example, about 10 bar for mixing gas, like CO₂, into the liquid at high efficiency obtained by a specified injection velocity causing a turbulence flow and a better gas absorption in the carbonation tank. Such a process, before the consumption of the carbonated liquid, usually requires a reduction of the tank pressure by releasing gas from the carbonation tank.

The existing carbonating processes mainly suffer from disadvantages such as the utilizing of a first pressure relief linked to the carbonation tank to release the access pressure of the gas, resulting in a reduced amount of gas absorbed by the liquid, a faster diffusion of the gas from the sparkling liquid, air contamination, liquid drops splashed out of the tank, noise generated during the gas release and ununiformed liquid dispatched due to the fast pressure drop in the tank while consuming the carbonated liquid.

Further, a gas supply line usually requires regulating means to reduce the gas pressure from the level it is kept in the gas tank (over 50 bar), wherein the low pressure of the gas supplied for injection to the pressurized tank reduces the gas amount absorbed by the liquid in the tank due to lower injection velocity.

If mixing means to mix the gas and liquid are provided, the mixing operation may generate noise and energy consumption.

In the view of the above, it is a primary object of the present invention to provide a method and a system adapted to dispense carbonized liquid in a more efficient and more comfortable way.

This object is achieved according to the present invention by a method for preparing and providing a carbonized liquid, the method comprising:
- providing a liquid to be carbonized in a tank,
- providing a gas comprising carbon dioxide in the tank such that a part of the gas is dissolved in the liquid and a part of the gas is collecting in a gas zone being a free space between the liquid and at least one interior wall of the tank, and
- discharging the carbonized liquid from the tank via an outlet duct using a pressure difference between the pressure prevailing in the tank and a pressure prevailing in the outlet duct and/or at an outlet end of the outlet duct,
- at least one injecting nozzle in fluid communication with the gas inlet duct, in particular located at an outlet end of the gas inlet duct inside the tank and/or located spaced apart from the liquid stored in the tank,
adapted to inject the gas into the liquid for mixing the gas and the liquid, wherein, when in normal operation mode, the gas having entered the tank is leaving the tank substantially only via the outlet duct.

Already at this point, some clarification shall be given to terms used herein. Here, "a liquid" may comprise all kinds of beverages, e.g. water, syrup, flavored water, tee or the like. The term "difference between the pressure prevailing in the tank and a pressure prevailing in the outlet duct" shall describe that a pressure in the gas zone of the tank, i.e. a space in the tank above the liquid level, applies a pressure force onto the liquid such that the liquid is expelled via the outlet duct by this force if the outlet duct is opened from the tank to a surrounding environment.

Furthermore, a "normal operation" describes a status of the system in a non-failure mode. That is, no failure of the system is present or, in other words, the system is within predefined operation parameters. The expression "substantially only" means that all of the gas entered the tank is leaving the tank via the outlet duct, except for gas that diffuses through the material of the tank, that leaves the tank due to minor leakage at connections of components or due to a small backflush into the inlet ducts, or the like which may not be prevented because of production limitations. For this reason the tank, that forms the carbonation chamber, may be sealed except for inlet, outlet, and security valve openings.

Again, the method according to the present invention allows omitting a pressure reduction valve for normal operation of the system. Therefore, the gas, which preferably comprises CO₂, may be released from the gas canister without regulating its pressure when entering the tank to obtain high velocity of the gas stream, while the pressure is translated to kinetic energy and, thus, high gas velocity.

Of course, it is conceivable that the injecting nozzle is located inside the liquid stored in the tank.

According to an embodiment of the present invention, the method may further comprise the steps of
- detecting a current level of the liquid in the tank using liquid level detection means, and
- providing the detected liquid level to a gas control unit adapted to control an amount and/or a flow rate of the gas into the tank.

Doing so, a same pressure in the tank may be achieved for different levels of liquid filled in the tank and/or a same degree of carbonization of the liquid may be achieved for different levels of liquid filled in the tank, as it is apparent that in a case, in which a low liquid level is present in the tank, more gas introduced into the tank may be required than in a case, in which a high liquid level is present in the tank, in order to obtain a same force urging the liquid out of the tank. In case that a carbonation level changes, the gas control unit may control the amount and/or flow rate of gas to be injected by using a timer to inject the gas for a longer time correlated to the liquid level and the required/demanded gas content in the liquid.

The method may further comprise the step of reducing a pressure of the carbonized liquid from the tank to the outlet end of the outlet duct using flow rate control means. It may be advantageous to reduce the pressure that is present in the tank for liquid to be delivered to a user at an end of the outlet duct, for example, at a tap, such that splashing of the liquid may be avoided, e.g. when filling the carbonized liquid into a container, such as a glass.

Further, the method may further comprise the step of introducing liquid into the tank from a liquid source. This may especially be performed based on signals from the liquid level detection means, such as a liquid level sensor. An introduction of liquid into the tank may be performed in a clocked manner, for example.

In existing carbonization methods, when a higher carbonation degree is required, a higher amount of gas is injected. The gas which is not dissolved in the liquid is released to the environment. In the method according to the present invention, this gas is not released to the environment (in a normal operation mode). Therefore, a lower liquid level may be required to keep a greater free space for the injected excess gas or a higher pressure in the tank is obtained while flow rate control means still prevent a splash of liquid while on the outlet. Hence, the method according to the present invention may further comprise carbonation intensity control by utilizing liquid level control means to control the liquid level and the remaining free space above the liquid. The larger the remaining volume of free space above the liquid, the more gas may be injected to reach the same tank pressure. This mechanism may be used to provide different carbonation intensity levels keeping the pressure constant. The height regulation may be further fine-tuned by using a timer delay to continue the liquid filling the tank after receiving signals from the liquid level detection means for a certain time.

In another aspect, the present invention refers to a system for preparing and providing a carbonized liquid, the system comprising:
- a tank adapted to store liquid to be carbonized,
- a gas source adapted to provide a gas comprising carbon dioxide,
- a gas inlet duct directing the gas from the gas source into the tank such that a part of the gas is dissolved in the liquid and a part of the gas is collecting in a gas zone being a free space between the liquid and at least one interior wall of the tank, and
- an outlet duct adapted to direct the carbonized liquid from an inlet end of the outlet duct located inside the tank to an outlet end of the outlet duct located outside the tank,
wherein a pressure prevailing in the tank is higher than a pressure prevailing in the outlet duct and/or at an outlet end of the outlet duct such that the carbonized liquid is expelled from the tank due to the pressure difference, wherein, when the system is in normal operation mode, the system is configured such that the gas having entered the tank is leaving the tank substantially only via the outlet duct.

It shall be noted at this point that all features, effects and/or advantages described with respect to the inventive method may also be applied to the system according to the invention, and vice versa.

The outlet duct may reach into the liquid in such a way that liquid may be expelled from the tank irrespective of the current liquid level, i.e. until a minimum level defined by the position of a beginning of the outlet duct in the tank. The opposite end of the outlet duct may be or may be connected to a faucet spout.

The system may further comprise liquid level detection means adapted to detect a current level of the liquid in the tank and to output a signal indicating the current level of the liquid in the tank. This may be realized by a sensor unit including, for example. The liquid level detection may comprise an ultrasonic transducer for emitting ultrasonic radiation towards the liquid surface and detecting returned radiation reflected from the liquid surface. Additionally, the system may further comprise gas control means adapted to control an amount of gas and/or a gas flow rate into the tank in accordance to the liquid level detected by the liquid level detection means. So, a specified amount of gas and/or a specified carbonation intensity may always be present in the tank in accordance with a corresponding liquid level in the tank. A higher amount of injected gas results in higher carbonation intensity. While a lower liquid level allows a higher amount of gas to be injected while keeping the tank pressure within required limits.

The system according to the present invention may not use an on/off valve in the gas inlet duct. So, when replacing a gas canister with a new one, gas/liquid may flow from the soda tank into the gas inlet duct. To prevent this, a one direction valve, such as a check valve, for example, may be placed in the inlet duct between the gas source and the outlet end of the gas inlet duct or may be placed at the outlet end of the gas injection duct, e.g. at an injecting nozzle.

Furthermore, the system may further comprise flow rate control means adapted to reduce a flow rate of the carbonized liquid from the tank to the outlet end of the outlet duct. This may be performed, for example, by increasing a flow resistance between the inlet duct and the outlet duct. As already mentioned with respect to the method according to the present invention, it may be necessary to reduce the flow rate at an outlet end of the outlet duct in order to avoid splashing of liquid from the outlet end into a sink or a beverage container.

To do so, the flow rate control means may be formed by a difference in vertical height between the inlet end and the outlet end, e.g. the faucet spout, of the outlet duct, in particular a height difference of at least 30 cm, and/or by an outlet duct having a long extension, in particular of at least 30 cm, and/or having a small diameter, in particular of equal or less than 8 mm, and/or by an outlet end of the outlet duct having a small opening area, in particular of at least 2 cm², and/or by a high flow resistive aerator, in particular at the outlet end of the outlet duct. Here, a difference in vertical height describes a vertical distance from the inlet end of the outlet duct to the outlet end of the outlet duct, i.e. in a direction parallel to a direction of gravity.

The system may further comprise security pressure relief means adapted to open the gas zone to an outside of the tank in a failure mode of the system. Even if, according to the present invention, the system may not be equipped with gas relief means for a normal operation mode, there may be security pressure relief means, realized by a check valve, for example, such that damage of the tank and possible harm to users in a surrounding of the tank can be prevented.

The gas source may be removable/attachable from/to the gas inlet duct of the system. For example, the gas source may be a cartridge or a gas bottle that may be exchangeably connected to the system.

In an embodiment of the present invention, the system may further comprise user input means adapted to receive input from a user of the system and to control a carbonation degree of the liquid in the tank. The user may, for example, adjust the carbonation degree of the liquid in the tank by manipulating a select switch having a plurality of selection positions each of which corresponds to a predetermined carbonation degree of the liquid in the tank. The carbonation degree of the liquid in the tank may then, in accordance with the selection position of the input means, be increased by introducing and mixing more gas into the liquid in the tank or may be decreased by introducing uncarbonized liquid into the tank. To be able to fill additional uncarbonized liquid into the tank, a maximum liquid level associated to a predetermined select switch position may be well below an upper wall of the tank.

The user input means may be further adapted to output a signal indicating the input from the user to the gas control means. As mentioned before, a selection position of the input means that correspond to a higher carbonation degree of the liquid than the carbonation degree of the liquid currently present in the tank may trigger the gas control means to introduce and mix more gas into the liquid in the tank.

Additionally, the system may further comprise timer means adapted to time and/or delay an introduction of liquid from a liquid source and/or of gas from a gas source (28) into the tank. A delay or timing of an introduction of liquid and/or gas into the tank may increase a user comfort, since pressure variations at the outlet end while dispensing liquid due to pressure variations in the tank when introducing further gas/liquid may be reduced. Furthermore, the timer means may be used to continue the liquid/gas filling into the tank with an additional quantity for fine-tuning the liquid level after receiving the signal indicating the input from the user or a carbonation intensity control.

Advantageously, the injection nozzle may be a venturi nozzle. The gas may thus be injected into the tank using a venturi nozzle that shapes the flow into a gas stream having a high velocity penetrating the liquid. This way, turbulence flow is generated in the liquid for a better mixing result.

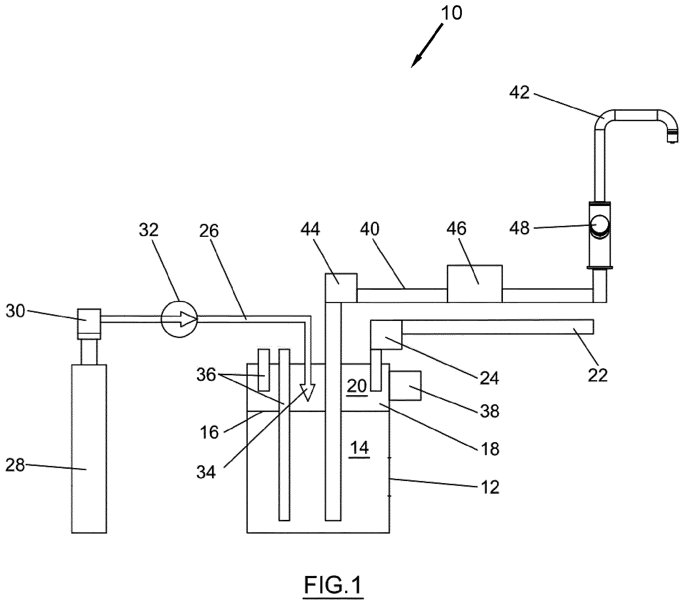

In the following, the present invention is described in greater detail with reference to the accompanying drawing in which
- Figure 1: shows a schematic illustration of the system according to the invention.

In Figure 1 a system according to the present invention is generally denoted with the reference numeral 10. The system 10 comprises a carbonation tank 12 that is adapted to store a liquid 14 which is filled in the tank 12 up to a liquid level 16 such that a space 18 in the tank above the liquid 14 is remaining in the tank being filled with a gas 20.

Here, the liquid is introduced into the tank 12 via a liquid inlet duct 22 that is connected on its end opposite to the tank 12 to a water network and/or to an exchangeable/refillable container containing liquid. In the liquid inlet duct 22, an on/off valve 24 is installed that is adapted to allow and to block a transfer of liquid into the tank 12 via the liquid inlet duct 22.

The gas 20 being absorbed by the liquid 14 and collecting inside the tank 12 above the liquid 14 is introduced into the tank 12 via a gas inlet duct 26. The gas inlet duct 26 is connected to a gas source such as a canister 28. In this embodiment, the canister 28 contains CO₂ and is exchangeable. Within the gas inlet duct 26, there is a mechanism 30 which may comprise a lever to enable gas flow from the canister 28 into the gas inlet duct 26. The lever may be triggered manually and/or by an electrical actuator, such as a motor and/or a solenoid, controlled by a control unit of the system 10 (not shown). Furthermore, there is a one direction valve 32 installed in the gas inlet duct 26 that is adapted to allow gas to flow from the canister 28 towards the tank 12 but is adapted to block gas and/or liquid flowing from the tank 12 towards the canister 28.

At the end of the gas inlet duct 26 inside the tank 12, there is an injection nozzle 34 which, in this embodiment, is designed as a venturi nozzle 34. Thus, the gas 20 coming from the gas inlet duct 26 is formed into a high velocity gas stream that is entering the liquid 14 being present in the tank 12 in order to obtain the carbonized liquid 14.

The one direction valve 32 may also be installed in the nozzle 34.

Inside the tank 12, liquid level detection means 36 are provided that are adapted to detect the liquid level 16 and to provide an according signal to the control unit in order to introduce gas and/or liquid into the tank 12.

To avoid that the pressure inside the tank 12 exceeds a predetermined pressure threshold that might cause damage to the system 10, the tank 12 is equipped with pressure relief means 38, for example realized by a pressure relieve valve, that are adapted to connect the space 18 with an environment surrounding the tank 12 to reduce pressure of the gas 20 in the tank 12.

The carbonized liquid 14 may be dispensed to a user via an outlet duct 40 at a faucet 42. When an electrical or mechanical on/off valve 44 implemented in the outlet duct 40 is opened, the pressure of the gas 20 inside the tank 12 is expelling the liquid 14 through the outlet duct 40. This way no additional liquid pump or the like might be necessary to dispense the carbonized liquid 14.

To allow a user of the system 10 to adjust the flow rate of the liquid 14 dispensed at the faucet 42, flow rate control means 46 are installed in the outlet duct 40. Furthermore, the user may adjust a carbonation degree, i.e. an amount of gas (CO₂) mixed into a predetermined amount of liquid, by adjusting a carbonation selection switch 48.

## Claims

1. Method for preparing and providing a carbonized liquid (14), the method comprising:
• providing a liquid to be carbonized in a tank (12),
• providing a gas comprising carbon dioxide in the tank (12) such that a part of the gas is dissolved in the liquid (14) and a part of the gas (20) is collecting in a gas zone being a free space (18) between the liquid (14) and at least one interior wall of the tank (12), and
• discharging the carbonized liquid (14) from the tank (12) via an outlet duct (40) using a pressure difference between the pressure prevailing in the tank (12) and a pressure prevailing in the outlet duct (40) and/or at an outlet end (42) of the outlet duct (40),
• at least one injecting nozzle (34) in fluid communication with a gas inlet duct (26), in particular located at an outlet end of the gas inlet duct (26) inside the tank (12) and/or located spaced apart from the liquid (14) stored in the tank (12), adapted to inject the gas into the liquid (14) for mixing the gas and the liquid (14),
wherein, when in normal operation mode, the gas having entered the tank (12) is leaving the tank (12) substantially only via the outlet duct (40).

2. Method according to claim 1,
**characterized in that** the method further comprises the steps of
• detecting a current level (16) of the liquid (14) in the tank (12) using liquid level detection means (36), and
• providing the detected liquid level (16) to a gas control unit adapted to control an amount and/or a flow rate of the gas into the tank (12).

3. Method according to claim 1 or 2,
**characterized in that** the method further comprises the step of reducing a flow rate of the carbonized liquid (14) from the tank (12) to the outlet end (42) of the outlet duct (40) using flow rate control means.

4. Method according to any of claims 1 to 3,
**characterized in that** the method further comprises the step of introducing liquid into the tank (12) from a liquid source.

5. System (10) for preparing and providing a carbonized liquid (14), the system (10) comprising:
• a tank (12) adapted to store liquid (14) to be carbonized,
• a gas source (28) adapted to provide a gas comprising carbon dioxide,
• an gas inlet duct (26) directing the gas from the gas source (28) into the tank (12) such that a part of the gas is dissolved in the liquid (14) and a part of the gas (20) is collecting in a gas zone being a free space (18) between the liquid (14) and at least one interior wall of the tank (12), and
• an outlet duct (40) adapted to direct the carbonized liquid (14) from an inlet end of the outlet duct (40) located inside the tank (12) to an outlet end (42) of the outlet duct (40) located outside the tank (12),
wherein a pressure prevailing in the tank (12) is higher than a pressure prevailing in the outlet duct (40) and/or at an outlet end (42) of the outlet duct (40) such that the carbonized liquid (14) is expelled from the tank (12) due to the pressure difference,
wherein, when the system (10) is in normal operation mode, the system (10) is configured such that the gas having entered the tank (12) is leaving the tank (12) substantially only via the outlet duct (40).

6. System (10) according to claim 5, further comprising liquid level detection means (36) adapted to detect a current level (16) of the liquid (14) in the tank (12) and to output a signal indicating the current level (16) of the liquid (14) in the tank (12).

7. System (10) according to claim 6, further comprising gas control means (30) adapted to control an amount of gas and/or a gas flow rate into the tank (12) in accordance to the liquid level (16) detected by the liquid level detection means (36).

8. System (10) according to any of claims 5 to 7, further comprising flow rate control means adapted to reduce a flow rate of the carbonized liquid (14) from the tank (12) to the outlet end (42) of the outlet duct (40).

9. System (10) according to claim 8, wherein the flow rate control means is formed by a difference in vertical height between the inlet end and the outlet end (42), e.g. a faucet spout (42), of the outlet duct (40), in particular a height difference of at least 30 cm, and/or by an outlet duct (40) having a long extension, in particular of at least 30 cm, and/or having a small diameter, in particular of equal or less than 8 mm, and/or by an outlet end (42) of the outlet duct (40) having a small opening area, in particular of at least 2 cm², and/or by a high flow resistive aerator, in particular at the outlet end (42) of the outlet duct (40).

10. System (10) according to any of claims 5 to 9, further comprising security pressure relief means (38) adapted to open the gas zone (18) to an outside of the tank (12) in a failure mode of the system (10).

11. System (10) according to any of claims 5 to 9, wherein the gas source (28) is removable/attachable from/to the gas inlet duct (26) of the system (10).

12. System (10) according to any of claims 5 to 9, further comprising user input means (48) adapted to receive input from a user of the system (10) and to control a carbonation degree of the liquid (14) in the tank (12).

13. System (10) according to claims 7 and 12, wherein the user input means (48) is further adapted to output a signal indicating the input from the user to the gas control means (30).

14. System (10) according to any of claims 5 to 13, further comprising timer means adapted to time and/or delay an introduction of liquid from a liquid source and/or of gas from a gas source (28) into the tank (12).

15. System (10) according to any of claims 5 to 14, wherein the injection nozzle (34) is a venturi nozzle (34).
